# DEMANDE DE BREVET EUROPEEN

(11) **EP 2 247 034 A1**
(43) Date de publication de la demande: **03.11.2010**
(21) Numéro de dépôt: 10161259.6
(22) Date de dépôt: 28.04.2010
(51) Int. Cl.: H04L 12/26, H04L 29/12, H04L 29/14, H04L 12/24

(54) **Detection et localisation d'une perte de connectivité au sein d'un réseau de communication**

(30) Priorité: 28.04.2009 FR 0902069
(71) Demandeur: Thales, 92200 Neuilly Sur Seine (FR)
(72) Inventeur: Dillon, Patrick, 78000, Versailles (FR); Suy, Santo, 94628, Rungis Cedex (FR)
(74) Mandataire: Dudouit, Isabelle

(57) **Abrégé**

Procédé de détection d'une panne au sein d'un réseau de communication redondé caractérisé en ce qu'il comprend les étapes suivantes :
○ une étape de transmission d'un premier flux (301) de trames de surveillance depuis son interface principale P_{A} à destination de son interface de secours P_{B}
○ une étape de transmission d'un second flux (302) de trames de surveillance depuis son interface de secours P_{B} à destination de son interface principale P_{A}
○ une étape de décision pour déclarer, selon réception ou non d'un flux ou des deux, une perte de connectivité unidirectionnelle ou bidirectionnelle.

## Description

La présente invention concerne un procédé de détection et de localisation d'une panne provoquant une perte de connectivité unidirectionnelle ou bidirectionnelle sur un lien reliant deux entités d'un réseau de communication.

Elle s'applique par exemple dans le cadre de systèmes informatiques ayant une exigence de très haute disponibilité tel qu'un système de contrôle du trafic aérien et plus particulièrement à un réseau de communication local redondé de type Ethernet.

Dans un tel système, le niveau de disponibilité du réseau de communication qui assure le transport de données entre les différentes unités de calcul composant le système doit être très important. Le taux de défaillance du système doit être garanti comme étant très proche de zéro avec une durée de détection, localisation et remplacement de l'équipement défaillant qui ne doit pas excéder trente minutes. C'est pourquoi, dans ce contexte, il est crucial de pouvoir détecter une panne se produisant sur un lien reliant deux entités du réseau de communication ainsi que de localiser précisément le lien affecté par cette panne afin d'augmenter le niveau de disponibilité global du système. Une panne peut avoir différentes causes, on peut citer par exemple une coupure unidirectionnelle de communication au sein de la carte d'interface réseau d'une unité de calcul, une coupure de communication au sein d'un équipement de réseau, une défaillance de l'intégrité du réseau ou encore une panne du lien de secours d'une unité de calcul.

Pour atteindre un niveau de disponibilité important dans un réseau de communication, il est connu de mettre en oeuvre des architectures de réseaux redondés et maillés comprenant des équipements de réseau sur lesquels sont connectées des unités de calcul par des liens redondants. En particulier, les réseaux dits locaux en technologie Ethernet sont construits selon une architecture réseau qui comprend au moins deux ensembles d'équipements de réseau reliés entre eux par plusieurs liens résilients. Chaque unité de calcul est ensuite reliée aux deux ensembles par deux liens distincts. Le fait d'utiliser deux liens de connexion permet d'augmenter la fiabilité du lien en le rendant redondant. Ce type d'architecture est connue de l'Homme du métier par l'appellation « coopération d'interfaces réseaux ». A un instant donné, un des deux liens est actif et l'autre lien est inactif, il est appelé lien de secours. Les solutions de l'état de l'art mettent en oeuvre une détection de panne uniquement sur le lien dit actif. Les mécanismes les plus souvent utilisés sont basés sur la surveillance de l'état physique du lien entre l'unité de calcul et l'équipement de réseau ainsi que la surveillance de la réception de données. Ces mécanismes peuvent être également complétés par l'envoi, parfois systématique, de messages d'écho connus sous le terme anglo-saxon « ping » afin de confirmer la détection d'une panne.

Les solutions existantes présentent de nombreux inconvénients. De façon générale le lien de secours n'est jamais surveillé, il n'y a pas de mécanisme de détection d'une panne intervenant sur la couche de niveau 2 mis en oeuvre sur ce lien afin de déclencher une maintenance préventive. La localisation de la panne au sein du réseau n'est pas non plus mise en oeuvre alors que ceci permettrait une décision de reconfiguration appropriée et/ou une meilleure réactivité des opérations de maintenance. Concernant la surveillance de l'état physique des équipements, les pannes partielles internes aux cartes d'interface des unités de calcul ou aux équipements réseaux eux-mêmes ne sont pas détectées. Par panne partielle on entend une panne affectant le lien entre deux composants matériels de la carte d'interface, en particulier entre un composant réalisant la couche physique et un composant réalisant la couche de niveau deux ou couche MAC (Medium Access Control). De plus, le principe de surveillance de la réception de données engendre certains inconvénients tels qu'un taux de fausse alarme important en cas d'absence de trafic à destination de l'unité de calcul ou une non détection des pannes d'émission. Enfin, l'envoi de messages d'échos induit une pollution importante du réseau car ces messages sont envoyés en diffusion générale vers l'ensemble des unités de calcul du réseau.

Le procédé selon l'invention permet de détecter certains types de pannes non prises en compte par les solutions de l'art antérieur tels qu'une perte de connectivité unidirectionnelle d'un lien actif et d'un lien de secours et ce quelle que soit l'origine de la panne, en particulier lorsque celle-ci est interne à une carte d'interface réseau. Ce procédé permet également, dans le cas d'une détection de panne, de localiser cette panne au sein du réseau de communication. La détection de l'ensemble des pannes de communication entre liens redondants et en particulier celles affectant le lien de secours de l'unité de calcul ainsi que leur localisation contribuent directement à augmenter la disponibilité du réseau de communication.

A cet effet, l'invention a pour objet un procédé de détection d'une panne au sein d'un réseau de communication redondé, ledit réseau comprenant au moins une première unité de calcul et un groupe d'unités de calcul participantes comportant chacune au moins une interface réseau principale P_{A} et une interface réseau de secours P_{B}, au moins deux commutateurs d'accès et au moins deux commutateurs de distribution, chaque unité de calcul étant reliée à travers ladite interface principale P_{A} à un premier commutateur d'accès à l'aide d'un lien direct et à travers ladite interface de secours P_{B} à un second commutateur d'accès à l'aide d'un lien de secours, chaque commutateur d'accès étant relié à un commutateur de distribution à l'aide d'un lien montant, chaque commutateur de distribution étant relié à un autre commutateur de distribution à travers un lien redondé, ladite panne provoquant une perte de connectivité unidirectionnelle ou bidirectionnelle sur un desdits liens reliant deux entités dudit réseau, ledit procédé étant **caractérisé en ce que** ladite première unité de calcul met en oeuvre successivement les étapes suivantes :
o une étape de transmission d'un premier flux de trames de surveillance depuis son interface principale P_{A} à destination de son interface de secours P_{B}
o une étape de transmission d'un second flux de trames de surveillance depuis son interface de secours P_{B} à destination de son interface principale P_{A}
o une étape de décision basée sur la logique suivante :
   ■ si ledit premier flux de trames de surveillance n'est pas reçu par l'interface de secours P_{B}, une perte de connectivité unidirectionnelle affectant les flux de communications provenant de l'interface principale P_{A} ou à destination de l'interface de secours P_{B} est déclarée,
   ■ si ledit second flux de trames de surveillance n'est pas reçu par l'interface principale P_{A}, une perte de connectivité unidirectionnelle affectant les flux de communications provenant de l'interface de secours P_{B} ou à destination de l'interface principale P_{A} est déclarée,
   ■ si aucun desdits flux de trames de surveillance n'est reçu par l'une des interfaces P_{A} et P_{B}, une perte de connectivité bidirectionnelle affectant l'ensemble des flux de communications en provenance ou à destination de ladite première unité de calcul est déclarée.

Dans une variante de réalisation de l'invention, ledit procédé comporte en plus les étapes suivantes :
o Une étape de transmission d'un flux de trames d'interrogation émis par ladite première unité de calcul ayant détecté une perte de connectivité sur au moins une de ses deux interfaces P_{A}, ledit flux ayant pour source ladite interface P_{A} et pour destination chaque interface P_{A},P_{B} du groupe d'unités de calcul participantes,
o Une étape de transmission de flux de trames de réponse émis par lesdites unités de calcul participantes, lesdits flux ayant pour source l'une des deux interfaces P_{A},P_{B} desdites unités de calcul ayant préalablement reçu ledit flux de trames d'interrogation sur ladite interface P_{A},P_{B} et pour destination ladite interface de l'unité de calcul ayant préalablement émis ledit flux de trames d'interrogation,
o Une étape d'analyse combinatoire localisant le lien affecté par ladite perte de connectivité à partir des flux de trames de réponse reçus et non reçus par ladite première unité de calcul, et de la connaissance des liens traversés par lesdits flux de trames de réponse.

Dans une variante de réalisation de l'invention, le groupe composé de ladite première unité de calcul et desdites unités de calcul participantes est divisé en plusieurs groupes d'appartenance, chacun desdits groupes d'appartenance regroupant les unités de calcul reliées aux mêmes commutateurs d'accès, ladite analyse combinatoire utilisant l'information du groupe d'appartenance de l'unité de calcul dont provient ledit flux de trames de réponses dans le but de lever les ambigüités sur la localisation de ladite panne.

Dans une variante de réalisation de l'invention, chacune desdites unités de calcul participantes comporte une pluralité d'interfaces de secours auxquelles est appliqué ledit procédé.

Dans une variante de réalisation de l'invention, ledit réseau de communication redondé est un réseau Ethernet maillé et redondé.

D'autres caractéristiques et avantages de la présente invention apparaîtront mieux à la lecture de la description qui suit en relation aux dessins annexés qui représentent:
La figure 1, un schéma illustrant un exemple d'architecture de réseau redondé et maillé,
La figure 2, un schéma illustrant un exemple d'architecture générique d'un réseau de communication local de type Ethernet redondé et maillé comprenant plusieurs unités de calcul,
La figure 3, un schéma illustrant le mécanisme de surveillance mis en oeuvre par le procédé de détection selon l'invention,
La figure 4, un schéma illustrant l'étape d'envoi de trames d'interrogations du procédé de localisation selon l'invention,
Les figures 5 et 6, deux exemples illustrant l'étape d'envoi de trames de réponse du procédé de localisation selon l'invention.

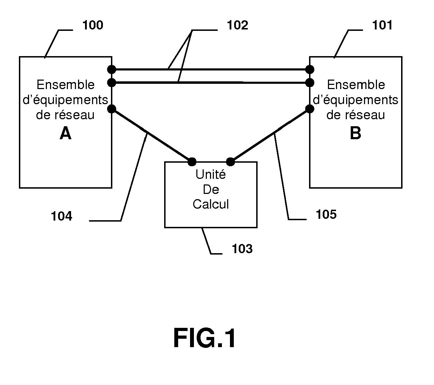

La figure 1 représente fonctionnellement une architecture de réseau local, par exemple en technologie Ethernet, comprenant deux ensembles A et B d'équipements de réseau 100,101 et au moins une unité de calcul 103 apte à produire des données à transmettre à travers le réseau. Les deux ensembles d'équipements de réseau 100,101 ont une fonction de commutateurs réseau et sont connectés ensemble par plusieurs liens résilients 102. Chaque unité de calcul 103 est reliée aux deux ensembles d'équipements de réseau 100,101 par deux liens distincts 104,105. Ce type d'architecture permet la mise en oeuvre, par l'unité de calcul 103, d'une fonctionnalité connue de l'Homme du métier par l'expression « coopération d'interfaces réseaux ». A un instant donné, un des liens 104,105 relié à l'unité de calcul 103 est un lien actif tandis que l'autre lien est inactif, il est appelé lien de secours et a pour fonction de remplacer le lien actif lorsque celui-ci est défectueux. Dans les solutions de l'état de l'art, la détection d'une panne sur le lien actif 104 et la décision de basculement sur le lien de secours 105 sont prises au niveau de chaque unité de calcul 103 individuellement et indépendamment des autres unités de calcul du réseau. La plupart des systèmes d'exploitation utilisés aujourd'hui dans les unités de calcul 103 mettent en oeuvre la fonctionnalité de « coopération d'interfaces réseaux » décrite précédemment. Cependant cette fonctionnalité présente des limitations qui peuvent être améliorées afin d'augmenter le niveau de disponibilité global du système. Certains types de pannes ne sont pas détectés ni localisés par les solutions actuelles, en particulier les pannes mettant en cause le lien de secours, ou celles intervenant au sein d'une carte d'interface entre deux composants matériels.

La solution apportée par l'invention est basée sur la mise en oeuvre de deux mécanismes. Un premier mécanisme de surveillance permet de surveiller la connectivité des interfaces réseaux participant à la coopération d'interfaces et en cas de détection de perte de connectivité de déclencher un second mécanisme de localisation de la panne. Une fois déclenché, ce second mécanisme permet de localiser la panne afin de renseigner éventuellement les organes existants de supervision et de gestion de la redondance des interfaces réseaux.

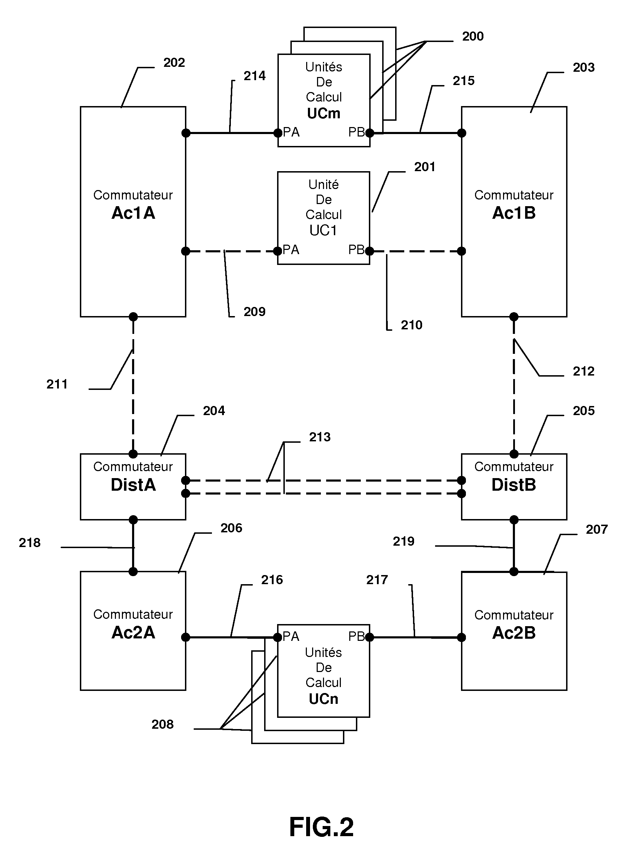

La figure 2 schématise l'architecture générique d'un réseau de communication local Ethernet redondé. Ce réseau est composé de plusieurs équipements de réseau de type commutateurs divisés en deux groupes. Des commutateurs de type « distribution » 204,205 reliés entre eux par un ensemble de liens redondés 213 forment un premier groupe d'équipements. Des commutateurs de type « accès » 202,203,206,207 auxquels sont connectées des unités de calcul 200,201,208 par un lien actif 209,214,216 et un lien de secours 210,215,217 forment un second groupe d'équipements. Chaque commutateur de type « accès » est relié à un commutateur de type « distribution » par un lien dit « montant » 211,212,218,219.

A titre d'exemple et de façon à illustrer la mise en oeuvre du procédé selon l'invention, la description qui suit est faite dans le cas où ledit procédé est mis en oeuvre sur l'unité de calcul UC1 201. Cet exemple n'est nullement limitatif et s'étend à toute autre unité de calcul du réseau.

Les pannes que le procédé selon l'invention mis en oeuvre sur l'unité de calcul UC1 201 cherche à détecter et localiser sont situées sur les liens 209,210 reliant l'unité de calcul UC1 201 aux commutateurs d'accès 202,203 ainsi que sur les liens 211,212,213 reliant ces deux commutateurs d'accès 202,203 entre eux via les commutateurs de distribution 204,205. Plus précisément, le procédé selon l'invention cherche à détecter et localiser les pertes de flux unidirectionnel ou bidirectionnel intervenant sur ces liens et résultant de certains types de pannes. Ces pannes peuvent être, par exemple, localisées au sein des cartes d'interface des unités de calcul ou au sein des commutateurs.

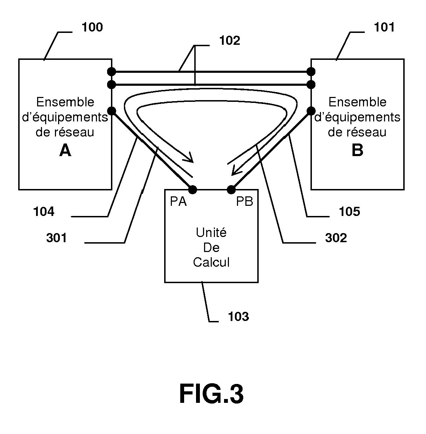

La figure 3 illustre le principe du mécanisme de surveillance mis en oeuvre par le procédé selon l'invention. Ce principe est basé sur l'échange périodique de trames de surveillance, par exemple respectant le protocole Ethernet, par l'unité de calcul entre ses ports physiques participant à un groupe de ports qui respectent la fonctionnalité de « coopération d'interfaces réseaux ».L'échange de trames mis en oeuvre est bidirectionnel. Dans l'exemple non limitatif de la figure 3 l'unité de calcul 103 possède deux ports P_{A} et P_{B} associés chacun à une interface et à un lien 104,105 reliant l'unité de calcul à deux ensembles d'équipements de réseau 100,101.Un premier flux 301 de trames de surveillance est transmis du port P_{A} vers le port P_{B} et un second flux 302 de trames de surveillance est transmis inversement du port P_{B} vers le port P_{A}. Les deux ports possèdent chacun une adresse MAC (Media Access Control) statique, respectivement nommées M@A et M@B. Ces échanges de flux 301,302 permettent de surveiller la connectivité bidirectionnelle du lien actif 104 et du lien de secours 105 ainsi que le fonctionnement des communications bidirectionnelles au sein de l'architecture réseau concernée 100,101,102.

Afin de rendre transparente la communication au niveau des couches supérieures de la pile réseau, il est indispensable que l'adresse MAC du lien actif soit toujours la même, c'est pourquoi une adresse MAC dite virtuelle M@V est allouée à l'interface connectée au lien actif. Le procédé de détection de pannes selon l'invention consiste à mettre en oeuvre l'envoi de trames de surveillance vers le lien actif puis le lien de secours alternativement. De plus, le procédé permet de tester la connectivité de l'ensemble du réseau considéré de façon bidirectionnelle en générant un flux de communication de surveillance point à point entre les deux ports de l'unité de calcul 103 sans pollution du réseau. L'envoi de trames de surveillance s'effectue au niveau de la couche de liaison de données ce qui permet de transmettre un flux provenant d'une des interfaces de la machine et à destination d'une autre interface de la même machine. Ce type de communication ne peut pas être mis en oeuvre au niveau de la couche réseau car une unité de calcul n'est identifiée, dans un réseau donné, que par une unique adresse réseau. La trame de surveillance peut être une trame de type Ethernet contenant, par exemple, un moyen d'identifier le protocole mis en oeuvre par le procédé selon l'invention, un moyen d'identifier qu'il s'agit d'une trame de surveillance, le nom de l'unité de calcul considérée ainsi que son numéro de groupe, les adresses MAC des interfaces source et destination et un moyen d'identifier quelle interface est active.

En cas de non réception des trames de surveillance par l'un des ports ou par les deux ports et ce après plusieurs tentatives de réémission, une perte de connectivité unidirectionnelle ou bidirectionnelle est détectée.

Le mécanisme de détection décrit précédemment à l'appui de la figure 3 ne permet pas de localiser la panne qui peut provenir, par exemple, d'un défaut de la carte d'interface d'un des ports, d'un des équipements de réseau ou d'un lien inter équipement de réseau. La détection de perte de connectivité déclenche ensuite un mécanisme de localisation de la panne selon l'invention.

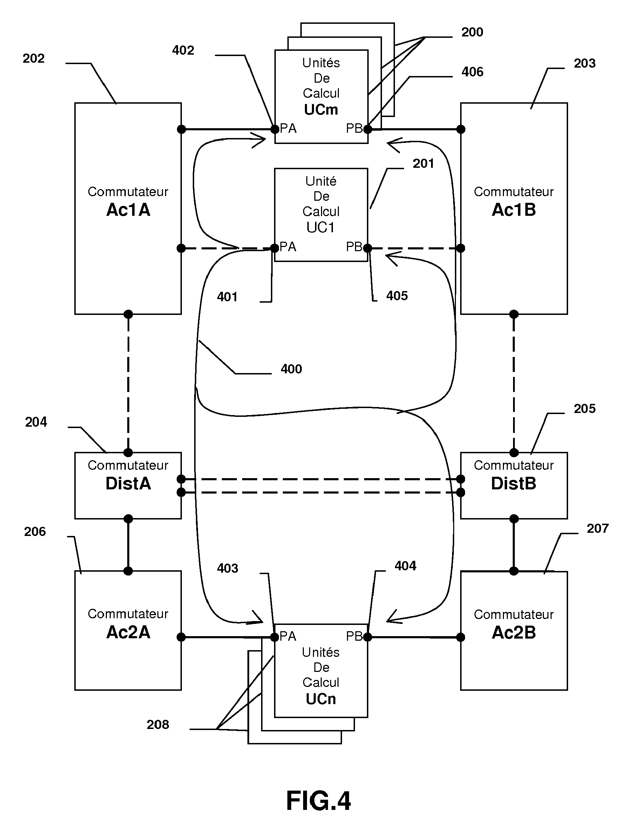

Le principe du mécanisme de localisation de panne selon l'invention consiste à émettre, depuis l'unité de calcul ayant préalablement détecté la perte de connectivité, des trames d'interrogation à destination de l'ensemble des unités de calcul participant au mécanisme. La figure 4 illustre ce principe. Les trames d'interrogation 400 sont envoyées à partir du port 401 de l'unité de calcul UC1 201 vers l'ensemble des ports actifs 402,403 et de secours 404,405,406 des autres unités de calcul 200,208 participantes du réseau y compris l'unité de calcul émettrice 201.

L'ensemble des unités de calcul participant au processus peut être déterminé suivant différents critères en fonction de l'architecture du système. Cet ensemble consiste, par exemple, en un réseau local virtuel dédié ou « Virtual Local Access Network » en anglais au sein duquel l'envoi des trames d'interrogation est effectué dans un mode de diffusion générale connu également sous l'appellation anglo-saxonne « broadcast ». Cette première solution a pour avantage d'être simple à mettre en oeuvre car toutes les unités de calcul du réseau local virtuel participent au procédé selon l'invention. L'ensemble des unités participantes peut également être défini comme un groupe pour lequel un adressage spécifique a préalablement été instauré ; dans ce cas l'envoi des trames d'interrogation se fait en direction dudit groupe selon une communication connue sous le terme anglo-saxon « multicast ». Enfin, la configuration statique ou dynamique du groupe d'unités de calcul participantes peut également être envisagée.

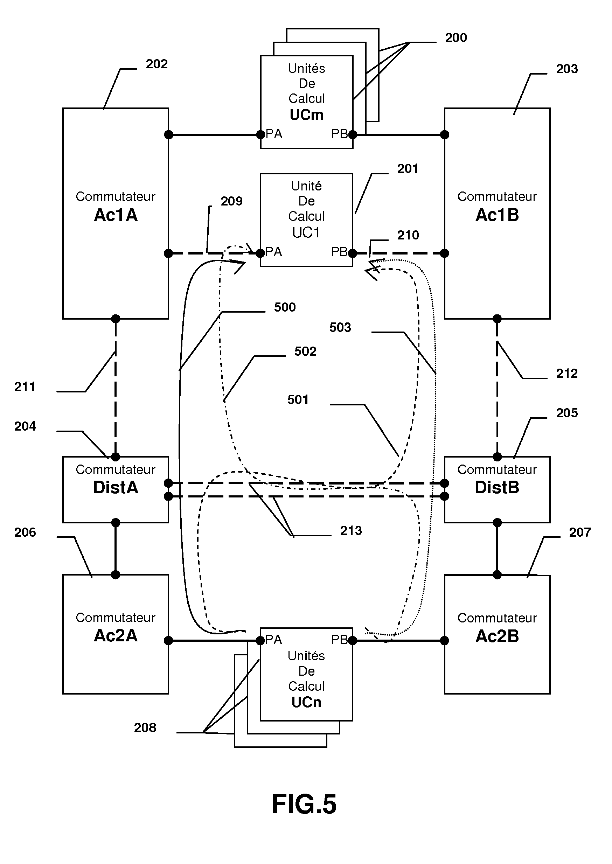

La figure 5 illustre le mécanisme mis en oeuvre lors de la réponse du groupe d'unités de calcul UCn 208 à la réception des trames d'interrogation émises par l'unité de calcul UC1 201. Pour chaque trame d'interrogation reçue par chacun des deux ports P_{A} et P_{B}, une trame de réponse est renvoyée vers chacun des deux ports de l'unité de calcul UC₁. Dans l'exemple de la figure 5, ce mécanisme engendre l'envoi de quatre flux de réponse en provenance d'une des unités de calcul du groupe UCn 208. Un premier flux 500 est envoyé par le port PA de la dite unité du groupe UCn 208 et traverse le lien 211 reliant le commutateur de distribution DistA 204 au commutateur d'accès Ac1A 202 puis le lien 209 reliant ledit commutateur d'accès 202 au port P_{A} de l'unité de calcul UC1 201. La réception de ce premier flux 500 constitué de trames de réponse permet la localisation éventuelle d'une panne sur l'un des deux liens 211,209 cités. De façon similaire, un second flux de réponses 501 est transmis depuis le port P_{A} d'une des unités du groupe UCn 208 vers le port P_{B} de l'unité UC1 201. Ce second flux 501 traverse le lien 213 reliant les deux commutateurs de distribution 204,205 ainsi que le lien 212 reliant le commutateur de distribution DistB 205 au commutateur d'accès Ac1 B 203 et enfin le lien 210 reliant ledit commutateur d'accès 203 à l'unité de calcul UC1 201. Ce second flux 501 permet donc de localiser une panne éventuelle sur l'un de ces trois liens. De façon symétrique, deux flux de réponses 502,503 sont émis depuis le port P_{B} d'une des unités du groupe UCn 208 vers les deux ports de l'unité de calcul UC1. Le flux de réponse 502 permet de localiser une panne sur l'un des trois liens 213,211,209 alors que le flux de réponse 503 permet une localisation de panne sur l'un des deux liens 212,210. Le maillage des flux de réponses 500,501,502,503 directs et croisés, répondant à des flux d'interrogation également maillés permet de tester la connectivité de tous les chemins possibles entre l'unité de calcul ayant détecté une perte de connectivité et les unités de calcul participantes.

Le procédé de localisation de la panne selon l'invention consiste alors à effectuer une analyse combinatoire des différentes trames de réponses reçues en fonction de leur origine afin de déterminer quel lien est défectueux. Afin de lever toute ambigüité résiduelle sur la localisation de la panne, il est nécessaire au sein de l'ensemble des unités de calcul participantes au procédé de définir plusieurs groupes d'appartenance. Dans l'exemple de la figure 5, un premier groupe d'appartenance est constitué du groupe d'unités de calcul UCn 208. L'analyse combinatoire des flux de réponses 500,501,502,503 provenant de ce groupe d'appartenance permet de différencier une panne intervenant sur le lien 213 reliant les deux commutateurs de distribution 204,205 d'une panne intervenant entre un des deux commutateurs de distribution 204,205 et l'unité de calcul émettrice UC1 201. Cependant elle ne permet pas de différencier une perte de connectivité intervenant sur le lien 211,212 reliant un commutateur de distribution 204,205 à un commutateur d'accès 202,203 d'une perte de connectivité affectant le lien 209,210 reliant un commutateur d'accès 202,203 à l'unité de calcul émettrice UC1 201. Le tableau suivant résume les relations logiques entre la non réception d'un flux et la localisation d'une panne.

**Tableau 1 : table d'analyse combinatoire du premier groupe d'appartenance**

| Référence du flux de réponse non reçu | Localisation de la panne sur l'un des trois groupes de liens G₁={213}, G₂={209,211}, G₃={210,212} |
|---|---|
| 500 | G₂ |
| 501 | G₁ ou G₃ |
| 502 | G₁ ou G₂ |
| 503 | G₃ |

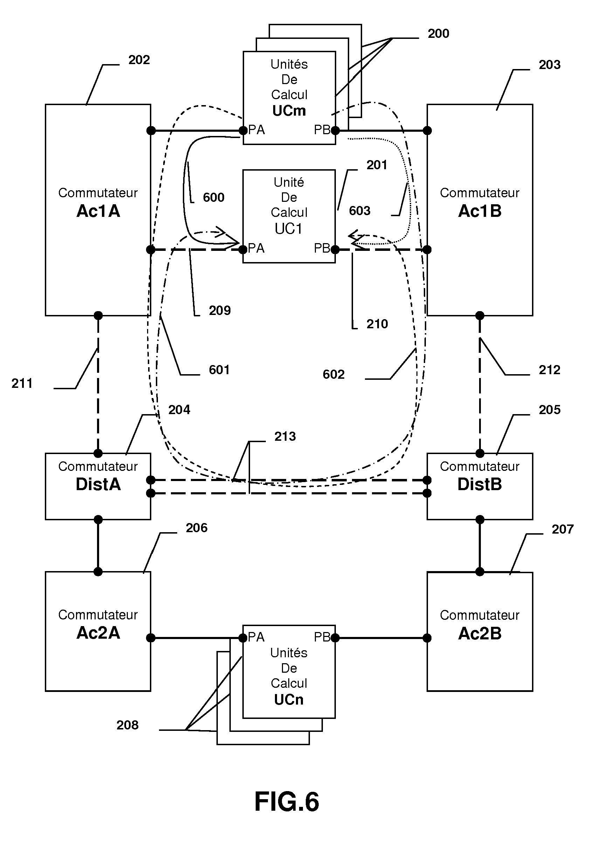

La figure 6 illustre le mécanisme d'envoi des trames de réponses mais cette fois à partir du groupe d'unités de calcul UCm 200. Ce second groupe d'unités de calcul correspond à un second groupe d'appartenances permettant de lever les ambigüités sur la localisation de la panne identifiées précédemment. De façon générale le critère d'appartenance d'une unité de calcul à un groupe est déterminé par la connexion de ladite unité à une paire de commutateurs d'accès donnée. Toutes les unités de calcul connectées à la même paire de commutateurs d'accès sont regroupées au sein du même groupe d'appartenance.

De façon similaire à l'exemple de la figure 5, l'envoi de flux de trames de réponses 600,601,602,603 depuis les ports d'une des unités de calcul UCm 200 vers l'unité de calcul 201 ayant préalablement émis un flux de trames d'interrogations permet, par un procédé d'analyse combinatoire selon l'invention, de discriminer la provenance d'une panne sur l'un des trois groupes de liens suivants. Le lien 209 reliant l'unité de calcul UC1 201 au commutateur d'accès Ac1A 202 est considéré comme défectueux si l'unité de calcul UC1 201 ne reçoit aucun des deux flux de réponse 600,601 envoyés par l'unité de calcul du groupe d'appartenance UCm 200. La même décision est appliquée au lien 210 reliant l'unité de calcul UC1 201 au commutateur d'accès Ac1 B 203 si aucun flux de réponses n'est reçu sur le port P_{B} de ladite unité 201. Le tableau suivant résume les relations logiques entre la non réception d'un flux de réponses par l'unité de calcul UC1 201 et la localisation d'une panne sur un lien ou un groupe de liens.

**Tableau 2 : table d'analyse combinatoire du second groupe d'appartenance**

| Référence du flux de réponse non reçu | Localisation de la panne sur l'un des trois groupes de liens G₄={209}, G₅={210}, G₆={211,213}, G₇={212,213} |
|---|---|
| 600 | G₄ |
| 601 | G₄ ou G₆ |
| 602 | G₅ ou G₇ |
| 603 | G₅ |

L'analyse combinatoire utilisant l'information de groupe d'appartenance permet donc de lever toute ambiguïté sur la provenance d'une panne sur l'ensemble des liens 209,210,211,212,213 considérés en combinant les informations obtenues à l'aide de la réception des trames de réponse provenant des différents groupes d'appartenance.

Les trames d'interrogation et de réponse peuvent être des trames Ethernet. Elles peuvent contenir par exemple, un moyen d'identifier le protocole mis en oeuvre par le procédé selon l'invention, un moyen d'identifier le type de trames, le nom de l'unité de calcul considérée ainsi que son numéro de groupe, les adresses MAC des interfaces source et destination et un moyen d'identifier quelle interface est active. Les trames de réponse peuvent contenir en plus un moyen d'identifier le nom et les adresses MAC de l'unité de calcul interrogeant.

Afin de permettre une localisation complète de l'équipement défaillant, le mécanisme décrit précédemment à l'appui des figures 4, 5 et 6 est également mis en oeuvre à partir du port 405 P_{B} permettant ainsi de localiser une panne unidirectionnelle de communication dans le sens P_{B} vers P_{A}.

Le procédé selon l'invention présente notamment l'avantage de permettre la détection et la localisation de pannes internes à une carte d'interface réseau, notamment une panne intervenant entre un composant de la couche physique et un composant de la couche de liaison de données. Ce type de pannes n'est pas détecté par les solutions connues qui ne mettent en oeuvre qu'une surveillance de la connectivité du lien physique entre deux entités. De plus l'invention permet une surveillance systématique du lien de secours en plus du lien actif, afin d'anticiper une perte de connectivité affectant l'interface de secours.

Le procédé selon l'invention présente également l'avantage d'être très peu consommateur de la bande passante du réseau en mode de surveillance et est également plus performant en temps de convergence. De plus la solution proposée est compatible avec les solutions existantes actuelles et peut donc cohabiter au sein d'un même système avec des unités de calcul ou d'autres types d'équipement n'implémentant pas cette solution.

L'invention permet également" lorsqu'une panne est localisée précisément sur un lien du réseau considéré, de déclencher un basculement des communications vers un lien de secours permettant aux flux de données d'éviter le lien affecté par la panne. L'invention permet ainsi de rétablir la connectivité entre l'unité de calcul émettrice et les autres unités de calcul participantes, ce qui a pour effet d'améliorer la réactivité des opérations de maintenance et d'augmenter ainsi le niveau de disponibilité du réseau. L'invention permet également la détection et la localisation des défauts de connectivité des liens de secours avant leur mise en oeuvre suite à une défaillance de connectivité du lien actif.

## Revendications

1. Procédé de détection d'une panne au sein d'un réseau de communication redondé, ledit réseau comprenant au moins une première unité de calcul (201) et un groupe d'unités de calcul (200,208) participantes comportant chacune au moins une interface réseau principale P_{A} et une interface réseau de secours P_{B}, au moins deux commutateurs d'accès (202,203,206,207) et au moins deux commutateurs de distribution (204,205), chaque unité de calcul (201,200,208) étant reliée à travers ladite interface principale P_{A} à un premier commutateur (202,206) d'accès à l'aide d'un lien direct (209,214,216) et à travers ladite interface de secours P_{B} à un second commutateur (203,207) d'accès à l'aide d'un lien de secours (210,215,217), chaque commutateur d'accès (202,203,206,207) étant relié à un commutateur de distribution (204,205) à l'aide d'un lien montant (211,212,218,219), chaque commutateur de distribution (204) étant relié à un autre commutateur de distribution (205) à travers un lien redondé (213), ladite panne provoquant une perte de connectivité unidirectionnelle ou bidirectionnelle sur un desdits liens (209,210,211,212,213) reliant deux entités dudit réseau, ledit procédé étant **caractérisé en ce que** ladite première unité de calcul (201) met en oeuvre successivement les étapes suivantes :
o une étape de transmission d'un premier flux (301) de trames de surveillance depuis son interface principale P_{A} à destination de son interface de secours P_{B}
o une étape de transmission d'un second flux (302) de trames de surveillance depuis son interface de secours P_{B} à destination de son interface principale P_{A}
o une étape de décision basée sur la logique suivante :
■ si ledit premier flux (301) de trames de surveillance n'est pas reçu par l'interface de secours P_{B}, une perte de connectivité unidirectionnelle affectant les flux de communications provenant de l'interface principale P_{A} ou à destination de l'interface de secours P_{B} est déclarée,
■ si ledit second flux (302) de trames de surveillance n'est pas reçu par l'interface principale P_{A}, une perte de connectivité unidirectionnelle affectant les flux de communications provenant de l'interface de secours P_{B} ou à destination de l'interface principale P_{A} est déclarée,
■ si aucun desdits flux (301,302) de trames de surveillance n'est reçu par l'une des interfaces P_{A} et P_{B}, une perte de connectivité bidirectionnelle affectant l'ensemble des flux de communications en provenance ou à destination de ladite première unité de calcul est déclarée.

2. Procédé selon la revendication 1 **caractérisé en ce qu'**il comporte en plus les étapes suivantes :
o Une étape de transmission d'un flux (400) de trames d'interrogation émis par ladite première unité de calcul (201) ayant détecté une perte de connectivité sur au moins une de ses deux interfaces P_{A} (401), ledit flux (400) ayant pour source ladite interface P_{A} (401) et pour destination chaque interface P_{A},P_{B} du groupe d'unités de calcul (200,208) participantes,
o Une étape de transmission de flux (500,501,502,503,600,601,602,603) de trames de réponse émis par lesdites unités de calcul (200,208) participantes, lesdits flux (500,501,502,503,600,601,602,603) ayant pour source l'une des deux interfaces P_{A},P_{B} desdites unités de calcul (200,208) ayant préalablement reçu ledit flux (400) de trames d'interrogation sur ladite interface P_{A},P_{B} et pour destination ladite interface (401) de l'unité de calcul (201) ayant préalablement émis ledit flux (400) de trames d'interrogation,
o Une étape d'analyse combinatoire localisant le lien (209,210,211,212,213) affecté par ladite perte de connectivité à partir des flux de trames de réponse reçus et non reçus par ladite première unité de calcul (201) , et de la connaissance des liens traversés par lesdits flux de trames de réponse.

3. Procédé selon la revendication 2 **caractérisé en ce que** le groupe composé de ladite première unité de calcul (201) et desdites unités de calcul (200,208) participantes est divisé en plusieurs groupes d'appartenance, chacun desdits groupes d'appartenance regroupant les unités de calcul reliées aux mêmes commutateurs d'accès, ladite analyse combinatoire utilisant l'information du groupe d'appartenance de l'unité de calcul dont provient ledit flux (500,501,502,503,600,601,602,603) de trames de réponses dans le but de lever les ambigüités sur la localisation de ladite panne.

4. Procédé selon l'une des revendications précédentes **caractérisé en ce que** chacune desdites unités de calcul participantes (200,201,208) comporte une pluralité d'interfaces de secours auxquelles est appliqué ledit procédé.

5. Procédé selon l'une des revendications précédentes **caractérisé en ce que** ledit réseau de communication redondé est un réseau Ethernet maillé et redondé.
